# EUROPEAN PATENT APPLICATION

(11) **EP 4 796 492 A1**
(43) Date of publication of application: **26.08.2026**
(21) Application number: 25382159.9
(22) Date of filing: 20.02.2025
(51) Int. Cl.: B67C 3/24

(54) **RETENTION DEVICE FOR CONTAINER VIAL**

(71) Applicant: Etiproces, S.L., 08211 Castellar del Vallès (ES)
(72) Inventor: TRUQUE RODRIGUEZ, Marc, 08211 CASTELLAR DEL VALLÈS (ES)
(74) Representative: Sugrañes, S.L.P.

(57) **Abstract**

The present invention relates to a retention device for container vial (1), comprising a clamping jaw (2) configured to surround and retain the container vial (1), wherein the clamping jaw (2) is coupled to a side push button (3) acting against elastic push means (4), such that when said side push button (3) is pressed, a space (6) is opened for inserting the container vial (1), and when said side push button (3) is released, said space (6) is closed so that the container vial (1) is retained, thereby enabling the container vial (1) to be stably retained in a preferably vertical orientation, facilitating the placement of labels on vials in a vertical manner for automated manufacturing processes.

## Description

### Technical field of the invention

The present invention relates to a device used for stabilising and transporting a container or package, known in English as a "puck". Specifically, the device of the invention is suitable for transporting a container configured as a vial stably and in an upright position. The device comprises a clamping jaw configured to surround and retain the container vial.

### Background of the invention

Traditional vial-shaped containers, such as vials for insulin injectables, had a cylindrical configuration, and when transported on a production line belt, optionally on a roller conveyor, the vials travelled in a horizontal position with their length perpendicular to the direction of travel of the belt. When moving forward, the vials were able to roll on themselves, due to their cylindrical shape, and with this, a label could be applied from above to the cylindrical wall of the vials as they rolled.

However, for some time now, vials for insulin injectables have changed from a cylindrical shape to a rather prismatic one, with a cross-section similar to a square with rounded corners, which prevents them from rolling in a uniform motion when transported lying flat on the conveyor belt of the production line, acquiring a tangential velocity with acceleration and deceleration. As a result, they can no longer be labelled horizontally as in the past.

Moreover, various devices known today as "pucks" in English are known, which are moulded plastic devices that perform the function of supporting and stabilising a package or container that is not capable of maintaining a stable position on its own, such as a vial, during a transportation, filling, closing and labelling process.

Thus, a carrier puck is known from the state of the art, as disclosed in US20200346870, comprising a body having an interior chamber, into which a receptacle to be held by the carrier puck can be inserted, the carrier puck comprising a deformable element, disposed at least in part within the interior chamber. The carrier puck further comprises a pressurising mechanism configured and arranged to facilitate fluid-filling and/or pressurisation of a region within the interior chamber, and in dependence upon said pressurization, the deformable element is forced to move inwardly of the interior chamber and into contact with a receptacle for securing the receptacle within the interior chamber of the carrier puck. In this way the available space within the interior chamber for accommodating a receptacle can be reduced about the receptacle, thus securing the receptacle, accurately and quickly in its location within the carrier puck.

It is also known from the prior art, as disclosed in document EP1393080, a test tube carrier for transporting test tubes in a transport system, said carrier comprising a base having a recess made thereto for accommodating the bottom of a test tube/vial, and support members adapted to the carrier base for clamping a test tube inserted in said recess and supporting the same. The support members are permanently affixed to said carrier base and comprise elongated portions with their free ends bent toward the vertical centre axis of the carrier base and said upper ends providing a support surface for making supportive contact to the test tube. The bottom of the carrier base recess for accommodating a test tube is flat and the carrier base is provided with test tube support members the support surfaces of which extend to at least two different heights from the top level of the carrier base.

In view of this, it is still desirable to achieve a design that enables a vial or container to be stably retained in a preferably vertical orientation, so as to facilitate, for example, the placement of labels on vials arranged in a vertical position for automated manufacturing processes and which also ensures that the container or vial remains retained within the device and cannot be removed simply by manually pulling the container or vial upwards, thus preserving the inviolability of the product contained in the vial.

### Explanation of the invention

In order to meet the objectives addressed, a retention device for container vials is disclosed to enable same to be transported vertically, and even to be turned around in a rotary machine on which said container can be labelled. For this purpose, the container vial is inserted into the retention device and a press-like clamping jaw retains said container in a completely stable. Thus, the retention device is intended to be able to perform actions for filling the container vial as well as operations in a production line, ensuring that the container vial is kept in a straight and stable position.

In order to be able to transport a container vial to be labelled in said vertical orientation and to be able to turn it around in the rotary machine, a fastening element is required, with improved performance compared to the already known devices where limitations are observed in terms of fastening with sufficient firmness. For this purpose, the present invention introduces an attachment element by way of a press, which retains the container vial securely in place, remaining in a completely stable position inside the device throughout the manufacturing line.

More particularly, the retention device for container vial comprises a clamping jaw configured to surround and retain the container vial, wherein the clamping jaw is coupled to a side push button, arranged in one of the side walls of the device, which acts against elastic push means, so that when said side push button is pressed, a space is opened for inserting the container vial, and after said side push button is released, said space is at least partially closed so that the container vial is retained. This enables a vial or container to be stably retained in a preferably vertical orientation, thus facilitating, for example, the placement of labels on vials in a vertical position for automated manufacturing processes. Additionally, the retention device enables a delicate marking or highly polished container to be protected by eliminating frictional damage with a rigid protective wall as it travels through said automated manufacturing process. It is also worth mentioning that in order to release the container vial, the push button on the side of the retention device must be pressed. This helps to ensure that it is not easy for an operator to remove the container or container vial from the retention device running on the automated manufacturing line, manipulate and return same back to the retention device, thus ensuring that the contents inside the container have not been tampered with.

It should be noted that the clamping jaw is slidable on at least one shaft extending from the side push button to a stop on a side wall of the device opposite to the side wall with the side push button, so that the clamping jaw can be moved continuously and progressively from an initial retention position to a final release position, and also in the reverse direction.

Preferably, the elastic push means comprise at least a first spring between the clamping jaw and the stop on the side wall, so that the clamping jaw is by default pushed into its position for retaining the container vial.

Optionally, the first spring is a coil spring that surrounds the shaft, so that the pushing of the clamping jaw is homogeneous along the shaft, minimising friction due to possible misalignment.

In a preferred embodiment of the invention, the clamping jaw is slidable on two symmetrically arranged shafts surrounded by two coil springs between the clamping jaw and the stop, achieving additional homogeneity along the shafts, minimising friction due to possible misalignments.

It should be noted that, optionally, a robot presses the side push button, whereby the two springs are compressed and the jaw part of the clamping jaw moves backwards, leaving enough space to introduce or insert the container vial.

According to another aspect of the invention, the clamping jaw comprises a second irregular face configured to fit in a first irregular face of the outer side surface of the container vial, so that retention is carried out more effectively, avoiding possible slippage and displacement between the clamping jaw and the container vial.

More specifically, the second irregular face comprises at least one protrusion configured to fit snugly into a recess in the first irregular face of the container vial. Thus, once the container vial is inserted, the springs expand by moving the jaw part of the clamping jaw, so that the second irregular face of the jaw fits in the first irregular face of the outer side surface of the container vial. Preferably the second irregular face of the jaw is the negative shape of the first irregular face of the container vial, so that the mutual engagement thereof makes the container vial self-centring with respect to the clamping jaw.

It is worth mentioning that the space provided in the retention device for inserting the container vial is a housing with a bottom at a depth such that when the container vial is inserted, the second irregular face of the jaw is at the appropriate height to fit in the first irregular face of the container vial, so that the possibility of a poor retention of the container vial due to a poor insertion is minimised, as the end of the stroke is accompanied by a proper fit.

In addition, and according to a preferred embodiment, the side push button comprises a pin element configured to contact the outer side surface of the container vial on the side opposite to the first irregular face of the container vial. Preferably, a second spring which is coupled to the side push button is arranged in the pin element, which causes the side push button, when not pressed, to be kept outwards, protruding from the side wall in which it is mounted. The pin does not move by the action of the spring, it only serves as a support for the spring so that the side push button is kept in a position protruding from the wall when at rest, and the spring is compressed when the push button is pressed.

Alternatively to the above, according to a particular embodiment, the side push button comprises a pin element configured to be inserted into a longitudinal notch present in the container vial, wherein the longitudinal notch is located in the outer side surface, on the side opposite to the first irregular face of the container vial. Said pin thus has an additional retention effect. In this embodiment, the pin element is coupled to a side push button by means of a second spring, so that pressure is exerted on the container vial for better retention, while at the same time enabling same to be released when said second spring is compressed.

According to another aspect of the invention, the retention device comprises a casing with a lid, a lower base and a plurality of at least partially flat side walls, so that the retention device can be held by mechanical means in an assembly line or automated manufacturing line.

Additionally, the lid comprises a hole above the housing, where the contour of the hole fits into or engages with the side opposite to the clamping jaw with the outer side surface of the container vial, so that the container vial can be retained between the clamping jaw and the contour of the hole.

Additionally, at least one of the side walls of the casing comprises a positioning slot, in order to determine the position and/or orientation of the retention device within the conveyor line, and within the labelling machine. Said positioning slot is optionally horizontal along an entire side wall.

According to a preferred embodiment of the invention, the casing is made of injection moulded plastic for ease of mass production, with a good surface finish.

Other features and advantages of said retention device for container vial object of the present invention will be apparent from the description of a preferred, but not exclusive, embodiment, which is illustrated by way of non-limiting example in the accompanying drawings.

### Brief description of the drawings

The attached drawings illustrate, by way of non-limiting example, some preferred embodiments of the inventive workstation and some of its components. In said drawings:
- Figure 1A is a perspective front view of the retention device before inserting the container vial;
- Figure 1B is a perspective rear view of the retention device before inserting the container vial;
- Figure 2A is a perspective front view of the retention device after inserting the container vial;
- Figure 2B is a perspective rear view of the retention device after inserting the container vial;
- Figure 3 is a perspective front view of the retention device with the release action of the container vial when the side push button is pressed;
- Figure 4A is a perspective view of the inside of the retention device before inserting the container vial, in a position in which the side push button is pressed;
- Figure 4B is a perspective view of the inside of the retention device after inserting the container vial, in which the side push button is not pressed;
- Figure 5A is a plan view of the inside of the retention device with the container vial retained;
- Figure 5B is a plan view of the inside of the retention device with the container vial released;
- Figure 6A is a partial perspective view of the inside of the retention device with the container vial released, in which the side push button is pressed; and
- Figure 6B is a plan view of the inside of the retention device with the container vial removed, in which the side push button is not pressed.

### Detailed description of an embodiment

In light of the aforementioned figures, and in accordance with the adopted numbering, one may observe therein a preferred exemplary embodiment of the invention, which comprises the parts and elements indicated and described in detail below.

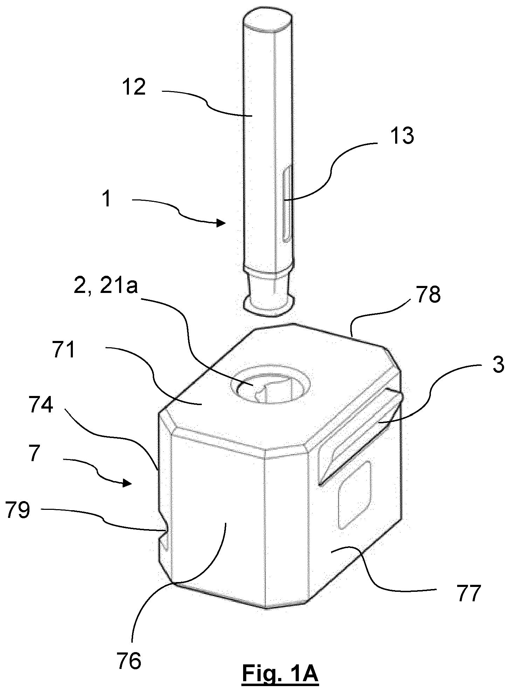

Figure 1A shows a perspective front view of the retention device before inserting a container vial 1. The container vial 1 comprises a side surface 12 with a notch 13 on one side. Moreover, the retention device has a clamping jaw 2 with at least one protrusion 21a, which moves under the action of a side push button 3. Externally, the retention device comprises a casing 7 with at least one lid 71 and a plurality of enveloping side walls 74, 76, 77, 78 forming essentially four faces connected in this case by chamfered sections. The side push button 3 is arranged in one of said side walls 77. It can also be seen that one of the side walls 74, 76, 77, 78, specifically the side wall 74, comprises a positioning slot 79.

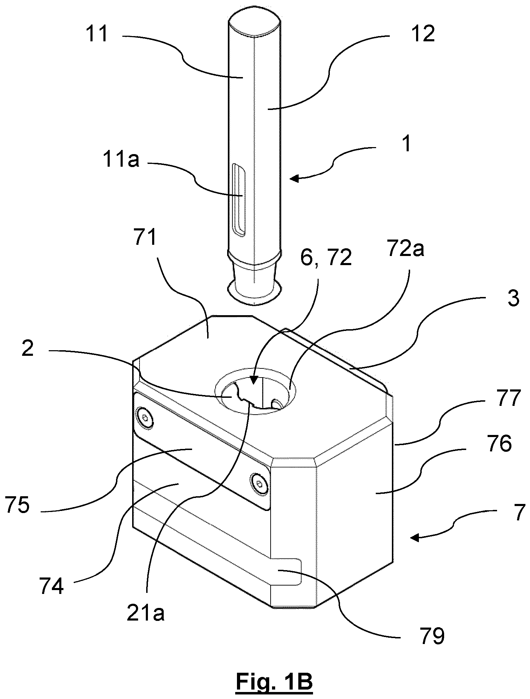

Figure 1B shows a perspective rear view of the retention device before inserting the container vial 1 showing a first face 11 of the side surface 12 with at least one recess 11a, the first face 11 being opposite to the face of the side surface 12 having the notch 13 shown in figure 1A. The clamping jaw 2 with a protrusion 21a which moves under the action of the side push button 3 is also shown. A space 6 can also be observed inside the casing 7, and that the lid 71 of the casing is provided with a hole 72 having a contour 72a which forms the entrance to the space 6. It can also be seen that one of the side walls 74, 76, 77, 78 of the casing 7 includes a stop 75, specifically the side wall 74 opposite to the one with the side push button 3.

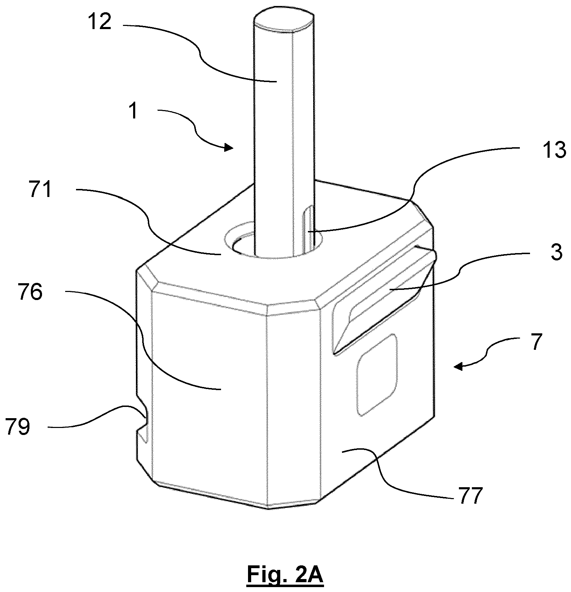

Figure 2A shows the same perspective front view of the retention device shown in figure 1A but after inserting the container vial 1.

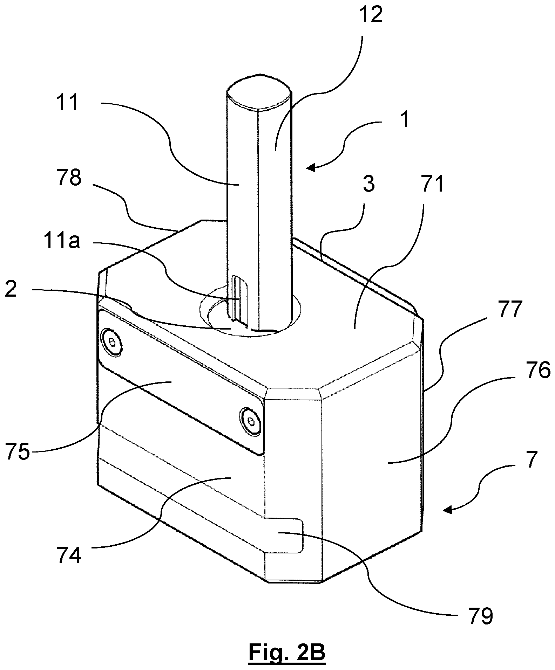

Figure 2B shows a perspective rear view of the retention device after inserting the container vial 1. The clamping jaw 2 can be seen in its retaining position, so that the container vial 1 is partially retained within the casing 7, passing through the hole 72 of the lid 71 and housed in the space 6 between the side walls 76, 77 and the stop 75.

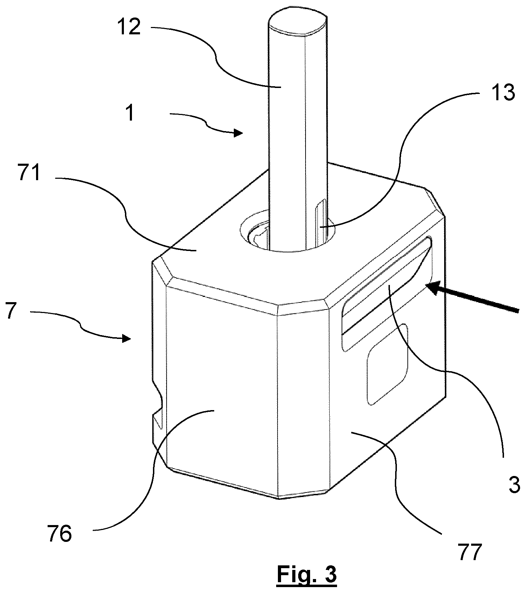

Figure 3 shows a perspective front view of the retention device with the action of releasing the container vial 1 when the side push button 3 is activated. It should be noted that the side push button 3 must also be activated, i.e., it must be pressed, to insert the container vial 1 into the retention device, as explained below.

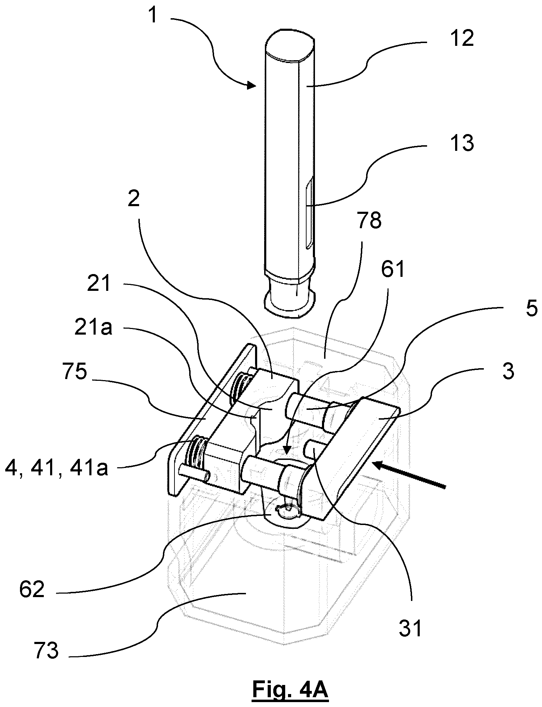

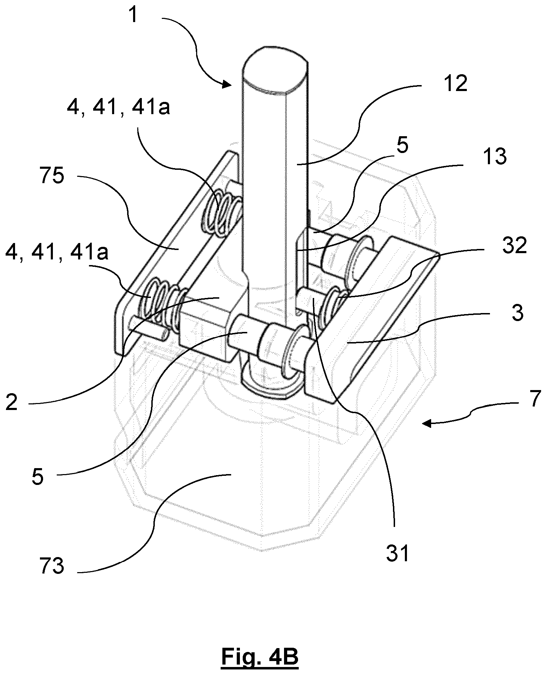

Figure 4A shows a perspective view of the inside of the retention device prepared for inserting the container vial 1. The clamping jaw 2 is shown with a second face 21 having a protrusion 21a, all activated by the side push button 3, which slides along two shafts 5. The clamping jaw 2 is subjected to the force of the push means 4, comprising a first spring 41, and what would be in particular a spring 41a on each shaft 5. Moreover, there is also a pin element 31 which sticks out into the housing 61 (see figure 4) which in turn has a bottom 62. The pin element 31 is configured to make contact with the outer side surface 12 of the container vial 1 on the side opposite to the first irregular face 11 of the container vial 1. A second spring 32 is coupled to the side push button 3 in the pin element 31, which causes the side push button 3, when not being pressed, i.e. in a rest position, to be kept protruding from the side face 77, as shown in Figure 1A. It should be explained that the pin 31 remains stationary, does not move or penetrates further into the housing 61, but its length is such that when the container vial 1 is inserted, the end of the pin 31 (the one opposite to the side push button 3) makes contact with the container vial 1 and in that position, it can fit into the notch 13, if present. It can also be seen in figure 4A that the casing 7 comprises a base 73, several side walls 74, 76, 77, 78, and a stop 75 arranged in one of the side walls. The stop 75 in turn can connect and attach several shafts 5 and create a support surface for the push means 4, in particular a spring 41a on each shaft 5.

In a different embodiment, it is contemplated that the pin element 31 contributes to narrowing the housing 61, the pin 31 being configured to be inserted into the longitudinal notch 13 of the container vial 1, located in the outer side surface 12, on the side opposite to the first irregular face 11 of the container vial 1.

Figure 4B shows a perspective view of the inside of the retention device after inserting the container vial 1. Moreover, the clamping jaw 2 can be seen in mechanical connection with the side push button 3, which comprises a pin element 31 with a second spring 32, and push means 4 on the other side, which can optionally be a first spring 41 or spring 41a, inserted over each shaft 5. This view with a degree of transparency also shows the lower, transparent portions of the casing 7 made of a base 73, side walls 74, 76, 77, 78, including a stop 75 in the side wall 74.

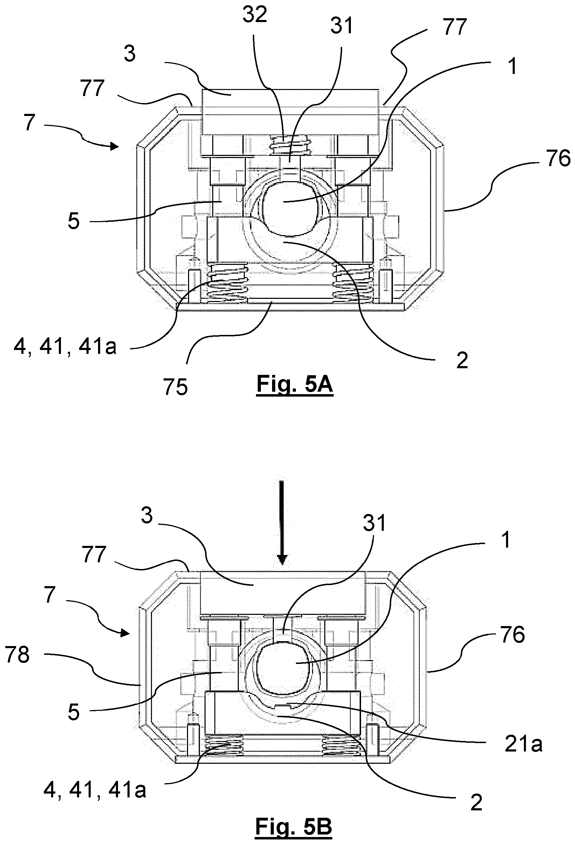

Figure 5A shows a plan view of the inside of the retention device with the container vial 1 retained, in the retaining position by the clamping jaw 2, after the side push button 3 has been released. In this position, the push means 4, with the first springs 41 or springs 41a, exert a retention force in the horizontal direction of their respective shaft 5, pushing the clamping jaw 2 to move towards the container vial 1. From the outside, the position of the casing 7 and its side wall 77 in relation to the side push button 3, which protrudes from the surface thereof, can be seen. The pin 31 makes contact, on the other side, with the container vial 1.

Figure 5B shows a plan view of the interior of the retention device with the container vial 1, in the released position, with the clamping jaw 2 having moved on each shaft 5, and the non-insertion of the protrusion 21a, by action of the side push button 3, overcoming the resistance of the push means 4, in particular the first spring 41 or spring 41a arranged on each shaft 5, while the pin element 31 remains in contact with the container vial 1. From the outside, the position of the casing 7 and its side wall 77 in relation to the side push button 3 can be seen, with the side push button 3 practically not protruding from the outside surface of the side wall 77 as the second spring 32 is compressed by being connected to the side push button 3.

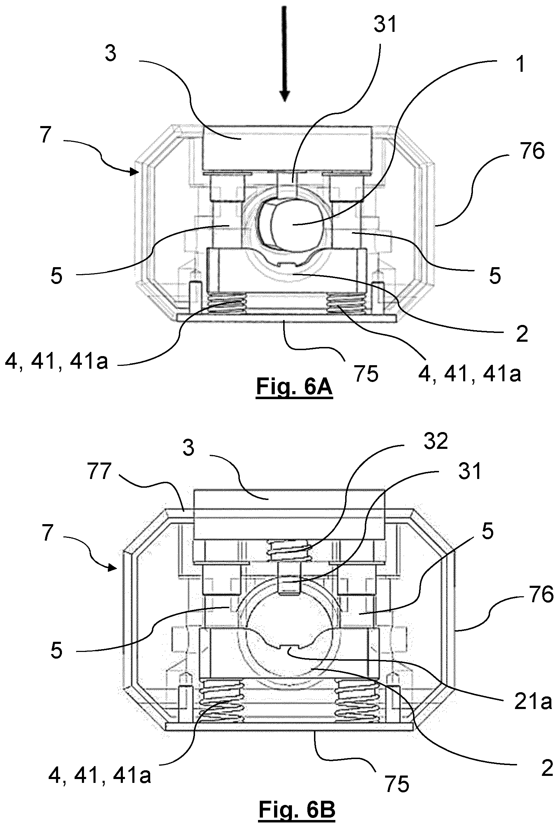

Figure 6A shows a partial perspective view of the interior of the retention device with the container vial 1 released, after the clamping jaw 2 has been moved on each shaft 5, and under the pushing of the side push button 3, overcoming the resistance of the push means 4, in particular of each first spring 41 or spring 41a.

Figure 6B shows a plan view of the inside of the retention device with the container vial 1 removed. At this point the clamping jaw 2 with its protrusion 21a has returned to its rest position over the shaft 5, under the action of the push means 4, specifically the first springs 41 or springs 41a. Moreover, the side push button 3 is no longer pressed and protrudes from the side wall 77 due to the action of the second spring 32.

More particularly, as can be seen in figures 4A and 4B, the retention device for container vial 1 comprises a clamping jaw 2 configured to surround and retain the container vial 1, wherein the clamping jaw 2 is coupled to a side push button 3 acting against elastic push means 4, so that when said side push button 3 is pressed, a space 6 is opened for inserting the container vial 1, and after said side push button 3 is released, said space 6 is at least partially closed so that the container vial 1 is retained. This means that the container vial 1 can be retained in a vertical position on an automatic manufacturing line, as the retention device is an essentially prismatic body.

Moreover, as shown in figures 4A and 4B, the clamping jaw 2 is slidable on at least one shaft 5 extending from the side push button 3 to a stop 75 on a side wall 74 opposite to the side wall 77 on which the side push button 3 is arranged.

It is worth mentioning that, as shown in figures 4A and 4B, the elastic push means 4 comprise at least a first spring 41 between the clamping jaw 2 and the stop 75 in the side wall 74. More specifically, as shown in figures 4A and 4B, the first spring 41 is a coil spring 41a surrounding the shaft 5.

In a preferred embodiment of the invention, as seen in figures 4A and 4B, the clamping jaw 2 is slidable on two symmetrically arranged shafts 5 surrounded by two coil springs 41a between the clamping jaw 2 and the stop 75 in the side wall 74.

More specifically, as seen in figures 1B and 2B, the clamping jaw 2 comprises a second irregular face 21 configured to fit on a first irregular face 11 of the outer side surface 12 of the container vial 1.

Optionally, as seen in figures 1B and 2B, the second irregular face 21 comprises at least one protrusion 21a configured to fit snugly into a recess 11a of the first irregular face 11 of the container vial 1. It should be noted that the cross-section of the container vial 1 is usually square but with convex sides for better handling and manual gripping.

According to another aspect of the invention, as seen in figure 4A, the space 6 is a housing 61 with a bottom 62 at a depth such that when the container vial 1 is inserted, the second irregular face 21 is at a suitable height to fit on the first irregular face 11.

Additionally, as shown in figures 4B and 5A, the side push button 3 comprises a pin element 31 configured by its dimensions to make contact with the outer side surface 12, on the side opposite to the first irregular face 11 of the container vial 1, where there may be a longitudinal notch 13. Furthermore, as shown in figures 4B and 5A, the pin element 31 is coupled to the side push button 3 by means of the second spring 32.

Moreover, as seen in figures 1A and 1B, the retention device comprises a casing 7 with a lid 71, a lower base 73 and a plurality of at least partially flat side walls 74.

It is worth mentioning that, as seen in figure 1B, the lid 71 comprises a hole 72 over the housing 61, wherein the contour 72a of the hole 72 fits on the side opposite to the clamping jaw 2 with the outer side surface 12 of the container vial 1.

In addition, as seen in figures 1B and 2B, at least one of the side walls 74, 76, 77, 78 of the casing 7 comprises a positioning slot 79. Additionally, as shown in figures 1A and 2A, the casing 7 is made of injection moulded plastic.

The details, shapes, dimensions and other accessory elements, as well as the materials used in the manufacture of the present retention device for container vials may be suitably replaced with others that are technically equivalent and do not depart from the essential features of the invention or from the scope defined by the claims included below.

### List of numerical references:

- 1: container vial
- 11: first face
- 11a: recess
- 12: side surface
- 13: notch
- 2: clamping jaw
- 21: second face
- 21st: protrusion
- 3: side push button
- 31: pin element
- 32: second spring
- 4: push means
- 41: first spring
- 41a: spring
- 5: shaft
- 6: space
- 61: housing
- 62: bottom
- 7: casing
- 71: lid
- 72: hole
- 72a: contour
- 73: base
- 74: side wall
- 75: stop
- 76: side wall
- 77: side wall
- 78: side wall
- 79: slot

## Claims

1. A retention device for container vial (1), comprising a clamping jaw (2) configured to surround and retain a container vial (1), **characterised in that** the clamping jaw (2) is coupled to a side push button (3) acting against elastic push means (4), so that when said side push button (3) is pressed, a space (6) is opened for inserting the container vial (1), and when said side push button (3) is released, said space (6) is at least partially closed so that the container vial (1) is retained.

2. The retention device for container vial (1) according to claim 1, **characterised in that** the clamping jaw (2) is slidable on at least one shaft (5) extending from the side push button (3) to a stop (75) provided on a side wall (74) of the retention device opposite to the side wall (77) on which the side push button (3) is arranged.

3. The retention device for container vial (1) according to claim 2, **characterised in that** the elastic push means (4) comprise at least one first spring (41) between the clamping jaw (2) and the stop (75).

4. The retention device for container vial (1) according to claim 3, **characterised in that** the first spring (41) is a coil spring (41a) surrounding the shaft (5).

5. The retention device for container vial (1) according to claim 4, **characterised in that** the clamping jaw (2) is slidable on two symmetrically arranged shafts (5) extending from the side push button (3) to the stop (75) and which are surrounded by two coil springs (41a) between the clamping jaw (2) and the stop (75).

6. The retention device for container vial (1) according to any of the preceding claims, **characterised in that** the clamping jaw (2) comprises a second irregular face (21) configured to fit in a first irregular face (11) of the outer side surface (12) of the container vial (1).

7. The retention device for container vial (1) according to claim 6, **characterised in that** the second irregular face (21) of the clamping jaw (2) comprises at least one protrusion (21a) configured to fit snugly into a recess (11a) of the first irregular face (11) of the container vial (1).

8. The retention device for a container vial (1) according to any of claims 6 or 7, **characterised in that** the space (6) is a housing (61) with a bottom (62) at a depth such that when the container vial (1) is inserted into the space (6), the second irregular face (21) of the clamping jaw (2) is at a suitable height to fit in the first irregular face (11) of the container vial (1).

9. The retention device for container vial (1) according to any of claims 6 to 8, **characterised in that** the side push button (3) comprises a pin element (31) configured to be inserted into a longitudinal notch (13) of the container vial (1), wherein the longitudinal notch (13) is located in the outer side surface (12), on the side opposite to the first irregular face (11) of the container vial (1).

10. The retention device for container vial (1) according to any of claims 6 to 8, **characterised in that** the side push button (3) comprises a pin element (31) configured to make contact with the outer side surface (12) of the container vial (1) on the side opposite to the first irregular face (11) of the container vial (1).

11. The retention device for container vial (1) according to claim 9 or 10, **characterised in that** a second spring (32) which is coupled to the side push button (3) is arranged in the pin element (31).

12. The retention device for container vial (1) according to any of claims 6 to 11, **characterised in that** it comprises a casing (7) with a lid (71), a base (73) at the bottom and a plurality of at least partially flat side walls (74, 76, 77, 78).

13. The retention device for container vial (1) according to claims 8 and 12, **characterised in that** the lid (71) comprises a hole (72) over the housing (61), wherein the contour (72a) of the hole (72) fits on the side opposite to the clamping jaw (2) with the outer side surface (12) of the container vial (1).

14. The retention device for container vial (1) according to any of claims 12 to 13, **characterised in that** at least one of the side walls (74, 76, 77, 78) of the casing (7) comprises a positioning slot (79).

15. The retention device for container vial (1) according to any of claims 12 to 14, **characterised in that** the casing (7) is made of injection moulded plastic.
